# EUROPEAN PATENT SPECIFICATION

(11) **EP 2 152 541 B1**
(45) Date of publication and mention of the grant of the patent: **01.02.2012**
(21) Application number: 08761657.9
(22) Date of filing: 12.05.2008
(51) Int. Cl.: B60P 1/54, B66C 23/44

(54) **LIFTING DEVICE FOR A VEHICLE AND A VEHICLE EQUIPPED WITH THE LIFTING DEVICE**
HEBEVORRICHTUNG FÜR EIN FAHRZEUG UND MIT EINER DERARTIGEN HEBEVORRICHTUNG AUSGESTATTETES FAHRZEUG
DISPOSITIF DE LEVAGE POUR VEHICULE ET VEHICULE EQUIPE DUDIT DISPOSITIF

(30) Priority: 10.05.2007 FI 20075333
(43) Date of publication of application: 17.02.2010
(73) Proprietor: Seppälä, Teijo, 40740 Jyväskylä (FI)
(72) Inventor: Seppälä, Teijo, 40740 Jyväskylä (FI)
(74) Representative: Helke, Kimmo Kalervo
(86) International application number: PCT/FI2008/050261
(87) International publication number: WO 2008/139035

(56) References cited:
- WO-A1-89/06612
- WO-A1-2006/009356
- DE-A1- 2 205 583
- GB-A- 1 178 365
- GB-A- 1 178 365
- GB-A- 2 353 267
- GB-A- 2 353 518
- KR-A- 20060 006 670

## Description

The present invention relates to a lifting device in a vehicle, in which there is a load space and beneath the load space in the centre is the longitudinal chassis of the vehicle that is substantially narrower than the load space. The invention relates more specifically to a lifting device according to the preamble to Claim 1. The invention also relates to a vehicle equipped with the lifting device.

The load space has at least one opening side, which definition naturally also covers a flat bed, i.e. there is generally access to the load space from the side. A set of booms can be retracted to a low transport position and raised from the transport position to the operating position.

In known truck lifting-device arrangements, the lifting device (hoist) is generally installed either in front of, or behind the bed. The lifting device requires either an open bed or an openable roof. The lifting device must be large enough for it to extend essentially over the entire length of the bed (typically 6 - 10 m). Such an arrangement cannot be used in a closed-body load space opening at the side. In some cases, the vehicle is equipped with a tail-gate hoist, or a special forklift truck, which can lift itself on board. This arrangement is extremely expensive. With large hoists, the weight of the lifting device is a real problem, because the effective load-carrying capacity is reduced.

All lifting-device installations in vehicles must meet the requirements of the Road Traffic Act. The most important restrictions are the greatest permitted width of the vehicle, generally 2550 mm, and the greatest permitted height, 4200 mm (in Finland). In addition, limits are set for the length, rear overhang, and many other dimensions of vehicles, which also affect the construction of a lifting device. Many of the hoists presently in use have a dead area near to their base, which reduces their maximum lifting capacity.

Application publication DE 2165867 discloses a moveable lifting device for the side of a truck or trailer, which is attached to the chassis of the vehicle with the aid of one sliding tube. When the hoist is pushed out, it rotates through 90°, when a column extension of the hoist turns to the vertical position. Some other lifting devices are disclosed in publications GB 1,178,365, DE 2208625, and CN 2637291Y. None of these can be fitted to a vehicle according to existing standards, without at least losing ground clearance or load height, because the support structures extend to a considerable extent under the chassis, or between it and the load space.

Application publication DE 2205583 discloses (Figures 1 and 2) a lifting device that differs from the above devices, in that in a laterally moveable frame there is a pin bearing, with a rotating base part in it. This type of lifting device incorporates the important realization that, in moving the lifting device to the middle area of the elongated bed and load space, the protrusion required by the lifting device will be only 50 % of that required by a lifting device located at the end of the load space. Thus a lifting device that is lighter than previously will be required at the side of the load space. In this DE publication, the extension post is pivoted to this base part and is raised to a vertical position with the aid of an operating device. The extension post must, however, be made strong, because it is stressed by a considerable bending moment. The construction of the set of booms relating to the extension post is not described, but it can be, for example, of the type disclosed in the aforementioned publication DE 2165867. In practice, the extension post (main boom) rotated to the vertical position is close to the edge of the bed, nor could the protrusion of the sliding tubes be much greater. In this case too, the lifting device is attached to two sliding tubes beneath the chassis, so that the solution reduces the ground clearance of the vehicle. In addition, due to the cardan shaft, an installation of this kind may be impossible. The rotating device comprises cylinders extending under the vehicle, which are then exposed to damage. In this case there is a considerable dead area near the base. Further lifting

devices are known from WO8906612 and WO2006009356. The present invention is intended to create a simple and lightly constructed lifting device arrangement for a vehicle, which does not have the drawbacks of the prior art. The characteristic features of the invention are stated in the accompanying Claims.

The invention is largely based on the realization that, in modern trucks and trailers the chassis is relatively narrower compared to the bed that it supports, so that a considerable amount of space remains on both sides of the chassis beneath the bed, which can be used for the lifting device. A second realization is that a lighter lifting device can be fitted, when folded up, essentially into the aforementioned free space at the side of the chassis and beneath the load space and the bed. As such, the transport location can be any appropriate space whatever relative to the load space.

The parallelogram arms can be of different lengths, so that they will actually form a trapezium. By means of the parallelogram arms, it is easier to move the base of the lifting device substantially further out from the side of the bed than when using telescopic arms. Thus the main boom can be actively and without danger used for moving the load, without it striking the bed or the load. At the same time, the dead area of the base is eliminated.

In one preferred embodiment, the main boom is in two parts and the articulated boom is pivoted between the part booms. The part booms are preferably rigidly connected to each other, so that the entire lifting device is more stable and the torsional moment is more easily supported using light-construction part booms. In one embodiment, the three hydraulic cylinders driving all three of the booms are of the same kind. In a preferred case, the hydraulic cylinder driving the main boom is pivoted to its upper end (in the operating position), or at least to close to it, and the cylinder of the articulated boom is pivoted at its lower end to the base or close to it, so that only slight bending strains act on the main boom. The construction of the main boom can then be made relatively light.

In one preferred embodiment, the rotating device is a slewing ring, in the centre of which are hydraulic and electrical connections permitting rotation, thus permitting both full-circle rotation and a compact construction. The rotating device of the slewing ring is preferably located inside the encased base, because it can then be made low by using an angle transmission. The first alternative is to use a combination of angle and reduction gearing carried out with conical and cylindrical gears. Another alternative is a worm gear integrated directly in the ring bearing, which is simultaneously both an angle transmission and reduction gear. In both cases, the motor is positioned horizontally.

The lifting device according to the invention is extremely stable - the load is always close to the base of the lifting device.

The lifting device according to the invention does not restrict the loading of the vehicle using other means, as is the case with a rear lifting device.

The lifting device according to the invention further gives the following advantages and possible applications.
- The lifting device is low in height - each boom can be made wide, because the symmetrical construction eliminates torsion.
- The construction of the slewing ring does not require space for operating cylinders (neither parallel to the length of the vehicle, nor transversely).
- The lifting device can be completely fitted into a case in the transport position.
- The device can be installed in existing box-body vehicles, because the construction requires no changes to a stand body. The bottom height does not depend on the lifting device, which has been made low.
- The upper surface of the lifting device need not rise above the chassis.
- The reach of the set of booms can be easily increased by means of a telescopic extension of the articulated boom.
- The parallelogram arms move the lifting device close to the centre of the body, so that a small lifting moment will be sufficient.
- During transportation, the lifting device is positioned transversely on the line of the wheels, where the need for ground clearance is least.
- By using a slewing ring, a particularly low construction is achieved, as well as a possibility for a construction that rotates in a full circle.

Other embodiments and advantages of the invention will be described hereinafter, in connection with the examples.

In the following, the invention is described with the aid of examples and with reference to the accompanying drawings, which show some embodiments of the lifting device according to the invention.
- Figure 1: shows a top view of the lifting-device arrangement in a truck, in which the lifting device has been turned out to the side from the load space.
- Figure 2: shows the lifting-device arrangement of Figure 1, with the lifting device in the transport position beneath the load space.
- Figure 3: shows a side view of the transport position of Figure 2, and additionally the protector case in the open
- Figure 4a: position. shows at rear view of the lifting device in the operating position, with the articulated boom pushed into the load space and the truck in partial cross-section.
- Figure 4b: shows a rear view of the lifting device in the operating position, with the articulated boom turned forwards.
- Figure. 4c: shows a detailed front view of the lifting device in its case.
- Figures 5: shows a top view of the lifting reach relative to the load space, achieved by means of the lifting-device arrangement.
- Figure 6.: shows a reach drawing of the lifting device, in the vertical plane.
- Figure 7: shows pivot construction between the main boom and the articulated boom.
- Figure 8a: shows a cross-section of one consruction of the base and the rotation device.
- Figures 8b and 8c: show schematically the construction of the transinission of the rotation device of Fig ure 8a.
- Figure 9: shows the lifting-device arrangement in connection with a semi-trailer, with the lift-ing device folded up.
- Figure 10: shows the operation of the lifting device of Figure 9, with the tractor and trailer separate from each other.

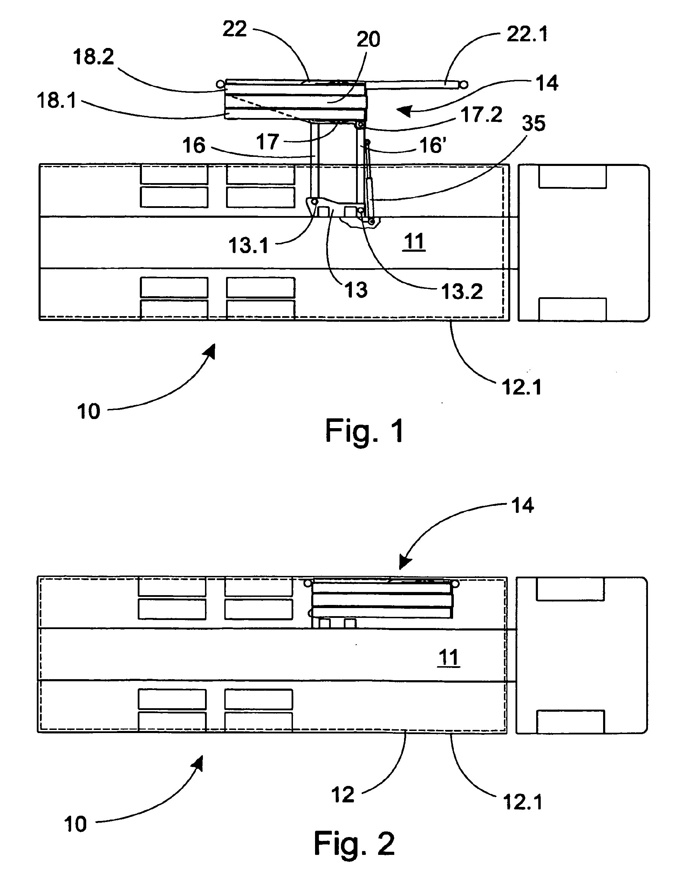

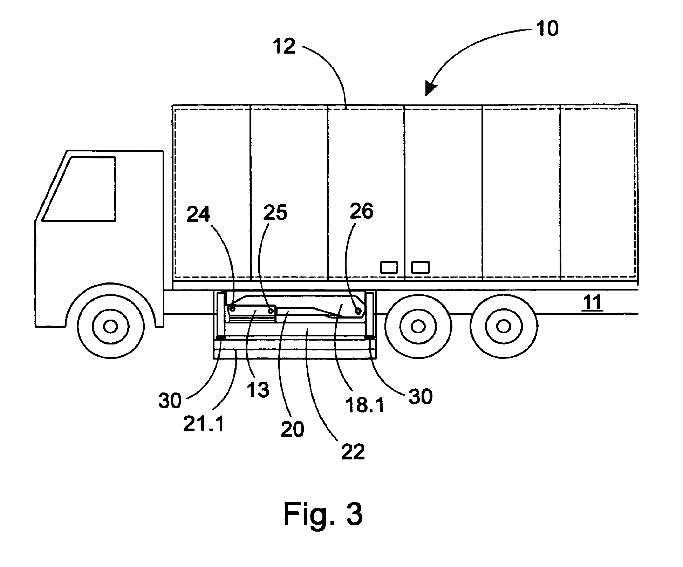

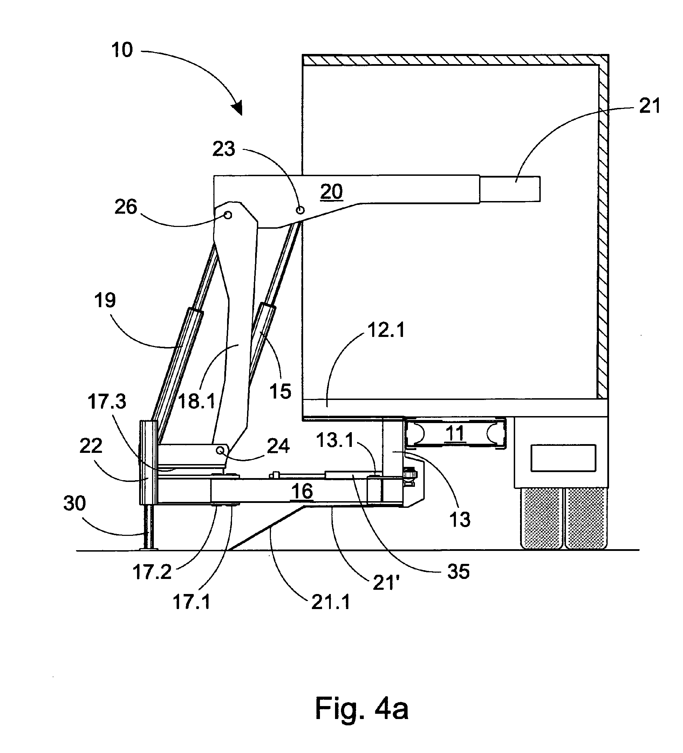

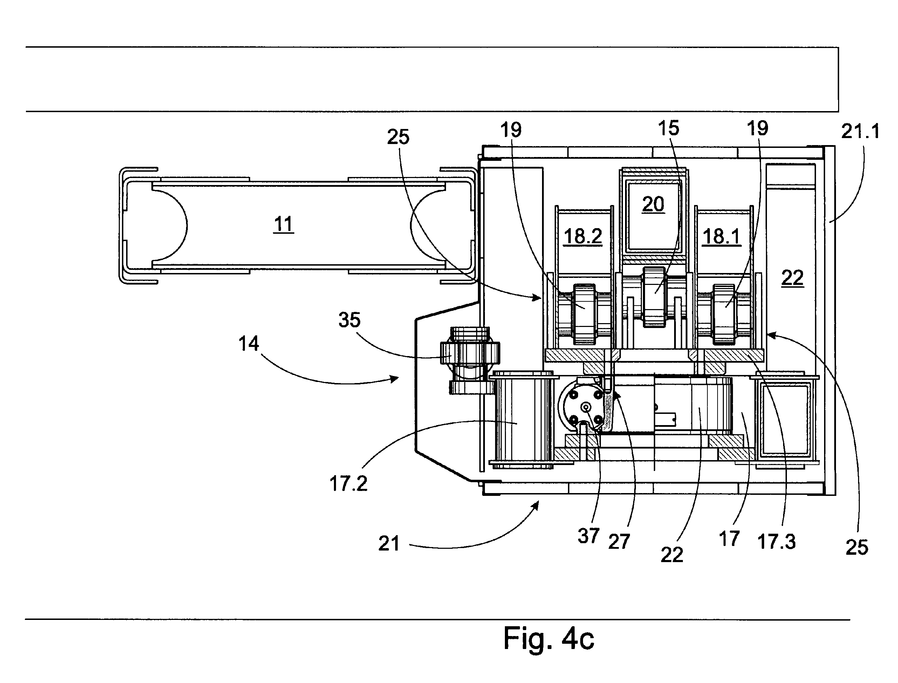

In Figures 1 - 6, the following reference numbers are used: the truck (generally, the vehicle) 10, the chassis of the truck. 11, the load space 12, the bed 12.1, and the lifting device 14, as well as its case 21' (shown only in Figures 3, 4a, and 4c).

In this example, the load space 12 is 7,8 -m long and 2.5-m wide. The width of the chassis 11 is about 8 5 0 mm, so that there is a 850-mm space for equipment on both sides of it. In this case, the lifting device 14 is installed on the left-hand side of the vehicle's chassis 11. on this side there is the opening side of the box load space.

Hoist attachments 13, in which there is a strong baseplate and two square beams as stiffeners, are attached to the vehicle's chassis 11. These support pivots 13.1, 13.2. to which the parallelogram arms 16 and 16' are connected and support the base 17 of the lifting device, through pivots 17.1 and 17.2. The parallelogram arms 13 are operated by a hydraulic cylinders 35. The device is otherwise located-entirely at the side of the chassis, except that in this construction the retracted hydraulic cylinder 25 is located partly under the chassis and parallel to it.

In the transport position, the lifting device 14 comprises a case protecting it, the front hatch of which is opened two take the lifting device out.

The main components of the lifting device 14 (Figures 1 and 4a) are a base 17, a two-part main boom 18.1, 18.2, and an articulated boom 20 with a telescopic arm 21, hydraulic cylinders 19 operating the main booms 18.1 and 18.2, a hydraulic cylinder 15 operating the articulated boom 20, and a support leg 22 driven by an operating device, in which there are pads 30 that can be lowered. In the support leg 22 there is an extendible telescopic extension 22.1, in which another pad 30 is installed. The base 17 supports the slewing ring and its rotating device. By means of special solutions these have been made low and able to fit inside the base (described later).

The stability of the lifting device is excellent, because the vehicle 10 acts as a counterweight and the support leg 22 is located at a distance from the side of the bed. The set of booms need not be opened more than slightly from the position of Figure 1 for it to be able to have lifting capability.

According to Figure 2, when retracted into the transport position, the lifting device will fit under the load space. 12 next to the chassis 11, without increasing the overall width of the vehicle 10. In the transport position, the lifting device 14 is located in front of the rear wheel, as seen in the side view according to Figure 3. In practice, the vehicle's ground clearance will not be reduced, if the axle structures and other equipment are taken into account. The lifting device is retracted using its own hydraulic cylinders. In Figure 3, the case 21' of the lifting device 14 is shown with the hatch 21.1 open, so that the lifting device can be taken out.

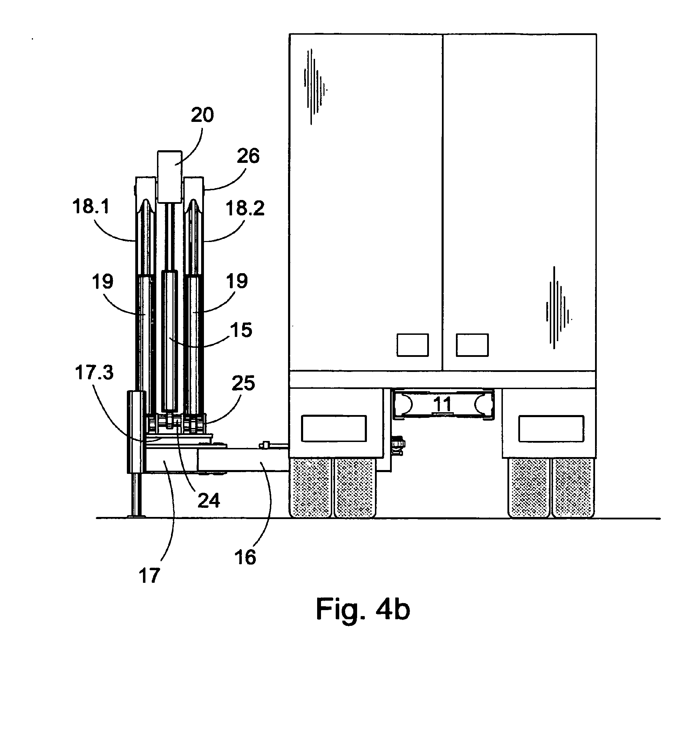

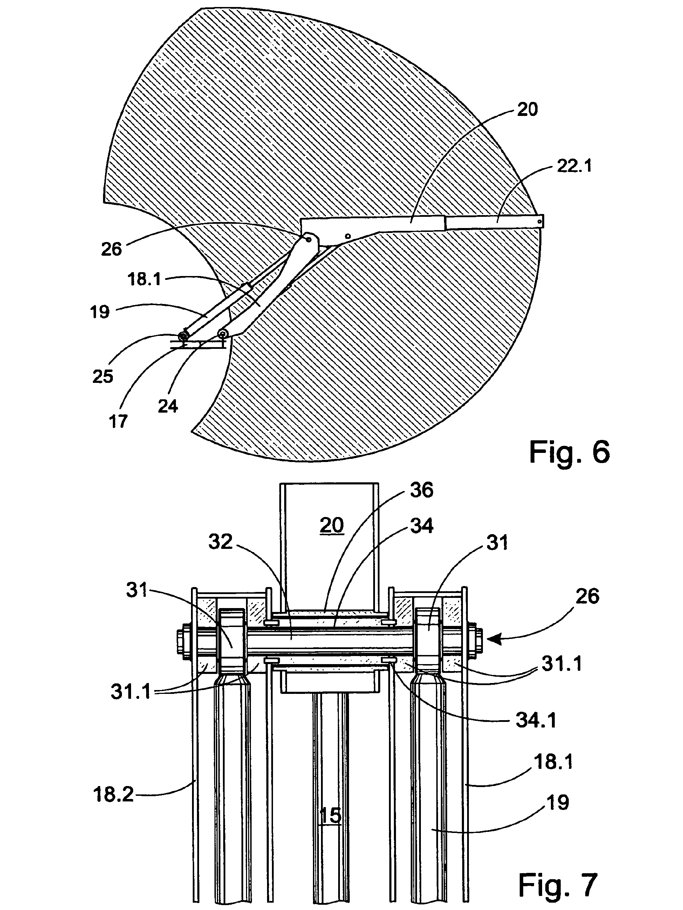

The boom parts 18.1 and 18.2 of the main boom are each attached with the aid of a pivot 24 to a lug in the rotating part 17.3 of the base 17, Figure 4a. The articulated boom 20 is attached to the main boom with the aid of a pivot 26 while the hydraulic cylinders 19, which are each attached at their lower ends two the rotating part 17.3 of the base with the aid of a pivot 25 (Figure 4b), operating the main booms 18.1, 18.2 are attached to the same pivot. The construction of the pivot 26 is shown in greater detail in Figure 7.

According to Figure 4a, it is advantageous if the pivot 24 of the main boom 18.1, 18.2 in the base is 50 - 100 cm outside the edge of the bed 12.1, so that the main booms 18.1, 18.2 and the hydraulic cylinder of the articulated boom 20 will have enough space to rotate in the direction of the bed 12.1. The load can be rotated through 360°, even if the lifting point were to be close to the base - the main boom will not strike the edge of the bed even in a tilted position. Generally, the length of the parallelogram arms is arranged in such a way that centre point of the slewing base is located, in the extreme position of the parallelogram arms 16, 16', 20 - 70 %, preferably 30 - 50 % of the width of the load space, outside the load spate. The use of the parallelogram arms thus relates to the possibility to pivote the main boom directly to the slewing base.

It can be understood from Figure 4a that no bending moment at all acts on the main boom. The main boom, i.e. the part booms 18.1 any 18.2, is stressed only by tensile and torsional strain.

The pivot 24 is located eccentrically relative to the axis of rotation of the base 17. This provides 'free of charge' the reach a rotation of 180°.

The base 17 includes a rotating slewing part 17.3 and its rotation devices. These are shown in detail in Figure 4c, in which the lifting device 14 is shown in a front view, retracted into the case 21', with the telescopic support leg 22.1 in cross-section.

The base 17 is a hollow structure and inside it is installed the slewing ring 27, in which is integrated a worm gear, for example,IMO Antriebseinheit GmbH (DE) slewing ring with worm gear, model WD-H 300/1. The rotation motor 37 is included in the same package, remaining inside the horizontal casing structure of the base 17.

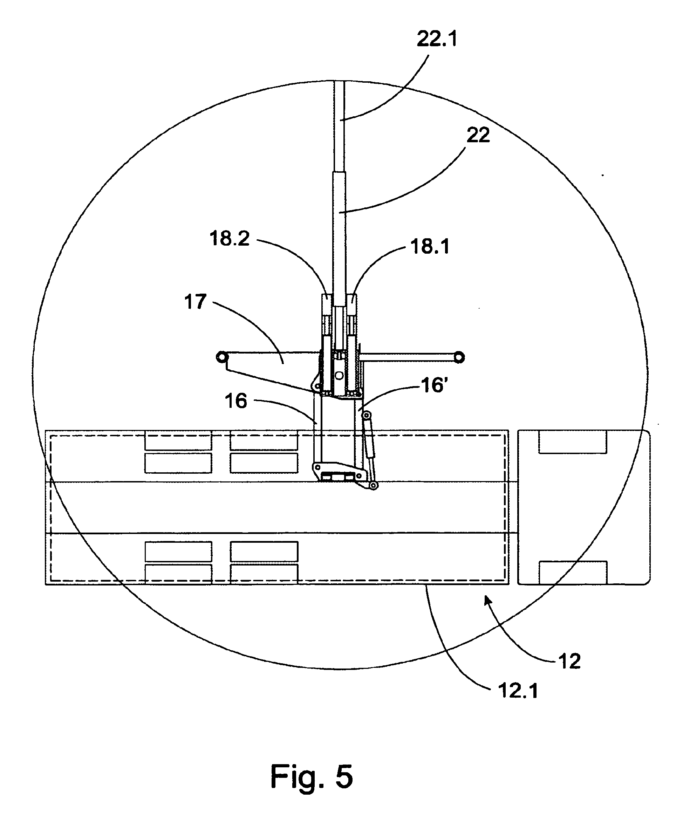

A particular advantage of the invention is the excellent reach of the lifting device, which can be seen in Figures 5 and 6. In the horizontal plane, the necessary reach is about half of that of a lifting device at the end of the bed. In the vertical plane, the reach is excellent in terms of the operation of lifting device. It can be used to load a closed box through a side door, nor does the lifting device have a dead area near the base. Thus, the lifting device can lift a heavy load right next to the base.

the special construction of the pivot 26 can be seen clearly in Figure 7. In this case, the boom parts 18.1 and 18.2 of the main boom, the articulated boom 20, and the hydraulic cylinders 19 are attached to the same pivot shaft. The structure of the set of booms is stiffened by the boom parts 18.1 and 18.2 being secured to each other with the aid of a sleeve 34, which is locked at its ends by pins 34.1 to the side plates of the boom parts 18.1 and 18.2. With the aid of the spacers 31.1 and the balls of the ball bearing 31, the entire structure can be compressed tightly together with the aid of a bolt 32. The articulated boom 20 is attached to the sleeve 34 using a sleeve 36.

All the booms (18.1, 18.2, and 20) are box structures, in order to create sufficient torsional stiffness. The side plates of the box are continued, to form protect for the hydraulic cylinders 15, 19.

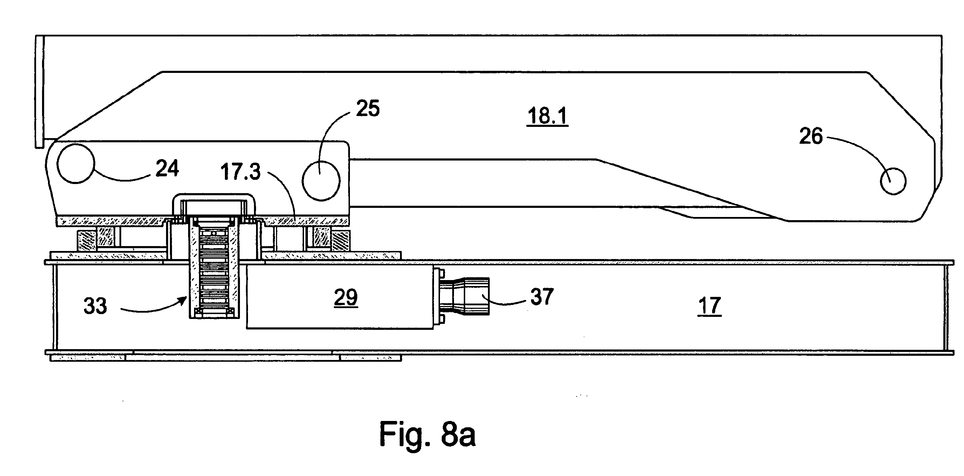

Figure 8a shows a variation equipped with an alternative rotation device to that of Figure 4c. In other ways, the construction is the same as that above. Here the box structure of the base 17 can be seen clearly. A slewing ring 28 with interval toothing is installed on top of the base 17. In this example, a Rollix (FR) slewing ring with internal toothing, model 07.0573.00 is used. It is driven by a separate angle and reduction gear 29. A slewing ring has by nature a low construction, compared to pivot bearings.

Figure 8a also shows a connector permitting full-circle rotation, for example, Gautier/Duff-Norton (USA) Group model MC612K. The pressurized oil lines of the hydraulic cylinders operating the booms are led through such a connector.

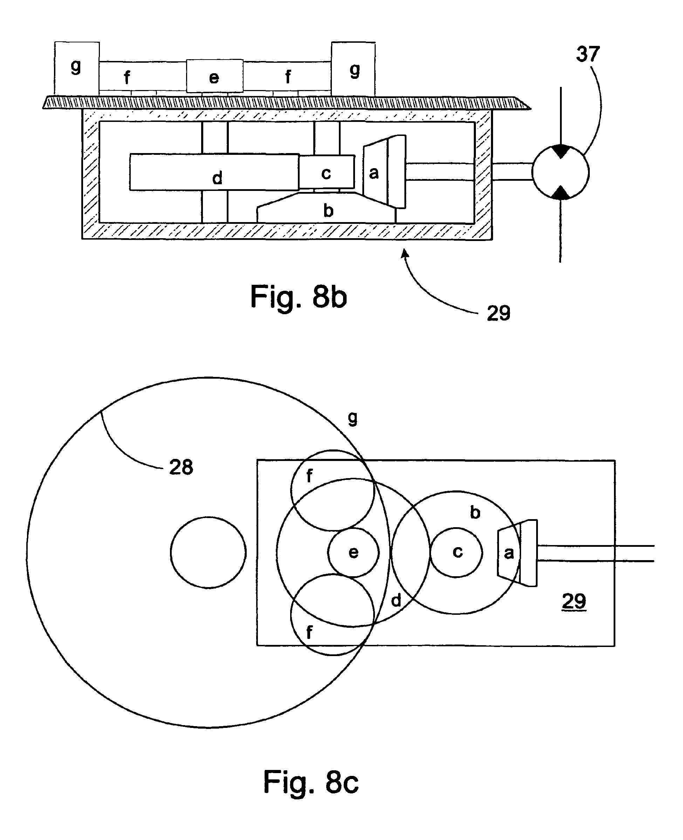

Figures 8b and 8c show the schematic construction of the separate angle and reduction gearing 29 of Figure 8a. According to Figure 8b, the motor 37 drives a conical gear a, which drives the opposing conical gear b of the angle gearing. On the shaft of this is a small gear c, which drives the larger gear d of the output shaft. The gear e of the output shaft drives the gear ring g (slewing ring 28) through intermediate wheels f mounted in fixed bearings. With the aid of the intermediate wheels f, the loading of the output gear e can be reduced.

A lifting device with a 4,9-m reach and a weight of 1500 kg can be used for working with the aforementioned 7,8-m load space. The lifting moment is 150 kNm (15 tm) and the maximum load 10 t.

Seen in a world-wide perspective, the standardization of road traffic and trucks means that, in absolute terms, a relatively narrow range will be sufficient to cover nearly all appropriate models. Thus a range of 5 - 15 tm in loading capability is more than sufficient in distribution trucks. The reach required is in the range 4 - 8 m, preferably 4,5 - 6 m.

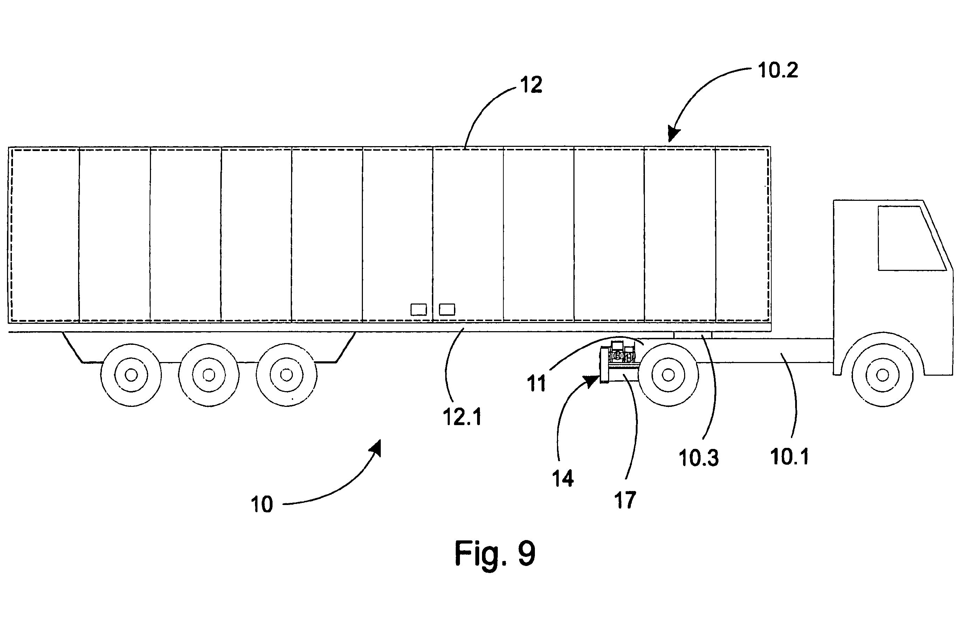

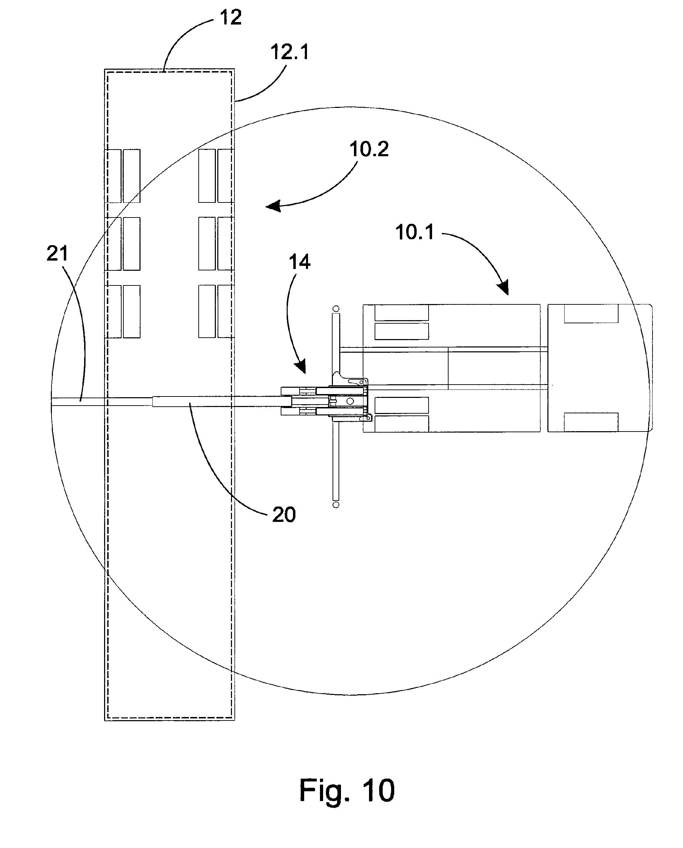

The same idea as above can also be applied in connection with semi-trailers, which is shown in Figures 9 and 10, in which the following reference numbering is used: entire vehicle 10, tractor unit 10.1, trailer 10.2, fifth-wheel coupling 10.3, trailer load space 12, bed 12.1, and lifting device 14.

The base part 17 of the lifting device 14 is fitted permanently to the tractor unit 10.1, because the tractor 10.1 forms the necessary transfer device. The lifting device is in other ways similar to that above.

The lifting device 14 is used, for example, according to Figure 10. The tractor 10.1 is driven either parallel to or transversely next to the trailer 10.2, to that the lifting device 14 is positioned relative to it as above. In this case, compromises can be made with the reach of the lifting device at the expense of operating comfort. The tractor must then be moved perhaps even several times along the length of the trailer, in order to reach the entire load space.

## Claims

1. Lifting device (14) for a vehicle (10), in which vehicle (10) there is a load space (12) having an access from a side and beneath the load space (12) in the centre there is the longitudinal chassis (11) of the vehicle, (10) that is substantially narrower than the load space (12), in which the lifting device (14) includes
- hoist attachments (13) connected to the chassis (11) of the vehicle (10),
- a base (17) connected to the hoist attachments (13) and to a rotating rotation base (177.3), together with rotation operating devices, installed on it,
- a main boom (18.1, 18.2) pivoted to the rotation base (17.3),
- an articulated boom (20) pivoted to the main boom (18.1, 18.2),
- a first hydraulic cylinder (19) for operating the main boom (18.1, 18.2),
- a second hydraulic cylinder (15) for operating the articulated boom (20), pivoted at one end to the articulated boom (20),
- at least one support leg (22) driven by an operating device, for preserving the stability of the vehicle (10) in the lifting situation,
- a lateral movement mechanism (16, 16', 35) for the base (17), by means of which the lifting device (14) can be moved between the transport position and the operating position, in which transport position the lifting device (14), with the main and articulated booms (18.1, 18.2, 20) in a retracted state, is under the load space (12) at the side of the chassis (11), and in the operating position the lifting device (14) is outside the access side of the load space (12) and essentially in the middle of the side,
**characterized in that** the lateral movement mechanism comprises parallelogram arms (16, 16'), as well as an operating device (35) driving them, each of which parallelogram arms (16, 16') are pivoted at one end to the hoist attachments (13) and at the other end to the base (17), and that the first hydraulic cylinder (19) for operating the main boom (18.1, 18.2) is arranged for moving the load, being pivoted at its first end to the rotation base (17.3) and at its second end to the main boom (18,1, 18.2), at its end at the articulated boom (20).

2. Lifting device (14) according to Claim 1, **characterized in that** the support leg (22) is installed on the outermost edge of the base (17).

3. Lifting device (14) according to Claim 1 or 2, **characterized in that** the main boom (18.1, 18.2) is a double boom, comprising two part booms, and the articulated boom (20) is located between these two part booms.

4. Lifting device (14) according to Claim 3, **characterized in that** the main boom (18.1, 18.2) is driven by two similar hydraulic cylinders (19) located at the said part booms and pivoted at their upper ends to a common pivot (26), to which the articulated boom 20 is pivoted to the main boom (18.1, 18.2).

5. Lifting device (14) according to Claim 4, **characterized in that** the articulated boom (20) is driven by a third similar hydraulic cylinder (15), pivoted in the centre at its lower end to the rotation base (17).

6. Lifting device (14) according to any of Claims 1 - 5, **characterized in that** the length of the parallelogram arms (16, 16') is arranged in such a way that, when the parallelogram arms are at their extreme position, the centre point of the rotation base is located outside the load space (12) at a point in the lateral direction 20 - 70 %, preferably 30 - 50 % of the width of the load space.

7. Lifting device (14) according to any of Claims 1 - 6, **characterized in that** the base (17) is a box structure.

8. Lifting device (14) according to any of Claims 1 - 7, **characterized in that** the rotation base is a slewing ring.

9. Lifting device (14) according to Claim 8, **characterized in that** the rotation operating device comprises an angle gear.

10. Lifting device (14) according to Claim 8, **characterized in that** the rotation operating device comprises a worm gear integrated in the slewing ring.

11. Lifting device (14) according to any of Claims I - 10, **characterized in that** there is a telescopic extension (21) in the articulated boom (20).

12. Lifting device (14) according to any of Claims 1 - 11, **characterized in that** the lifting device (14) comprises, in its transport position, a case (21') protecting it, in which there is a side hatch (21.1) for extracting the listing device (14) through it to the operating position.

13. Vehicle, in which there is an elongated load space (12) opening on at least one side, **characterized in that** it is equipped with a lifting device (14) according to any of Claims 1 - 12.

14. Vehicle according to Claim 13, **characterized in that** the load space (12) is closed box opening at the side.

15. Vehicle according to Claim 13 or 14, **characterized in that** the loading capability of the lifting device (14) is arranged to be in the range 5 - 15 tm and its reach to be in the range 4 - 8 m.

## Patentansprüche

1. Hebevorrichtung (14) für ein Fahrzeug (10), das einen seitlich zugänglichen Laderaum (12) und unter dem Laderaum (12) in der Mitte einen im Vergleich zu diesem wesentlich schmaleren, langgestreckten Fahrzeugrahmen (11) hat, wobei die Hebevorrichtung (14)
- an dem Rahmen (11) des Fahrzeugs (10) angebrachte Hebevorrichtungs-Befestigungsmittel (13),
- ein mit den besagten Befestigungsmitteln (13) verbundenes Fußteil (17), an dem ein drehbarer Drehfuß (17.3) einschließlich Drehstellgliedern angeordnet ist,
- einen Hauptausleger (18.1, 18.2), angelenkt an den Drehfuß (17.3),
- einen an den Hauptausleger (18.1, 18.2) angelenkten Gelenkausleger (20) und
- einen ersten Hydraulikzylinder (19) zum Betätigen des Hauptauslegers (18.1, 18.2),
- einen zur Betätigung des Gelenkauslegers (20) dienenden zweiten Hydraulikzylinder (15), der mit seinem einen Ende an den Gelenkausleger (20) angelenkt ist.
- wenigstens ein stellgliedbetätigtes Stützbein (22) zur Sicherung der Stabilität des Fahrzeugs (10) in Hebesituation,
- einen Fußteil-(17)-Seitenverlagerungsmechanismus (16, 16', 35), mit dem die Hebevorrichtung (14) zwischen ihrer Transportstellung und ihrer Betriebstellung hin und her bewegt werden kann, wobei sich in Transportstellung die Hebevorrichtung (14) mit Hauptausleger und Gelenkausleger (18.1, 18.2, 20) in zusammengeklapptem Zustand unter dem Laderaum (12) seitlich vom Fahrzeugrahmen 11 und in Betriebsstellung außerhalb der Zugangsseite des Laderaums (12) und im Wesentlichen in der Mitte dieser Seite befindet, umfasst, **dadurch gekennzeichnet, dass** der Seitenverlagerungsmechanismus Parallelogrammarme (16, 16') und ein diese betätigendes Stellglied (35) umfasst und beide Parallelogrammarme (16, 16') mit ihrem ersten Ende an die Hebevorrichtungs-Befestigungsmittel (13) und mit ihrem zweiten Ende an das Fußteil (17) angelenkt sind, und dass der zum Betätigen des Hauptauslegers (18.1, 8.2) dienende erste Hydraulikzylinder (19) zum Bewegen der Last eingerichtet ist und mit seinem ersten Ende an den Drehfuß (17.3) und mit seinem zweiten Ende an das dem Gelenkausleger (20) zugewandte Ende des Hauptauslegers (18.1, 18.2) angelenkt ist.

2. Hebevorrichtung (14) nach Anspruch 1, **dadurch gekennzeichnet, dass** das Stützbein (22) am Außenrand des Fußteils (17) befestigt ist.

3. Hebevorrichtung (14) nach Anspruch 1 oder 2, **dadurch gekennzeichnet, dass** der Hauptausleger (18.1, 18.2) ein zweiteiliger, d.h. "Doppelausleger" ist, der zwei Teilausleger umfasst, und der Gelenkausleger (20) zwischen diesen beiden Teilauslegern angeordnet ist.

4. Hebevorrichtung (14) nach Anspruch 3, **dadurch gekennzeichnet, dass** der Hauptausleger (18.1, 18.2) von zwei gleichartigen Hydraulikzylindern (19) betätigt wird, die bei den besagten Teilauslegern angeordnet und mit ihrem oberen Ende an das gemeinsame Gelenk (26), über das der Gelenkausleger (20) mit dem Hauptausleger (18.1, 18.2) verbunden ist, angelenkt sind.

5. Hebevorrichtung (14) nach Anspruch 4, **dadurch gekennzeichnet, dass** der Gelenkausleger (20) von einem dritten gleichartigen Hydraulikzylinder (15) betätigt wird, der mit seinem unteren Ende an den Drehfuß (17) in der Mitte angelenkt ist.

6. Hebevorrichtung (14) nach irgendeinem der Ansprüche 1 bis 5, **dadurch gekennzeichnet, dass** die Länge der Parallelogrammarme (16, 16') so eingerichtet ist, dass das Zentrum des Drehfußes bei Extremstellung der Parallelogrammarme in seitlicher Richtung um 20 - 70 %, bevorzugt um 30 - 50 % der Laderaumbreite außerhalb des Laderaums (12) zu liegen kommt.

7. Hebevorrichtung (14) nach irgendeinem der Ansprüche 1 bis 6, **dadurch gekennzeichnet, dass** das Fußteil (17) in Kastenbauweise ausgeführt ist.

8. Hebevorrichtung (14) nach irgendeinem der Ansprüche 1 bis 7, **dadurch gekennzeichnet, dass** der Drehfuß aus einem Drehkranz besteht.

9. Hebevorrichtung (14) nach Anspruch 8, **dadurch gekennzeichnet, dass** das Drehstellglied ein Winkelgetriebe umfasst.

10. Hebevorrichtung (14) nach Anspruch 8, **dadurch gekennzeichnet, dass** das Drehstellglied ein in den Drehkranz integriertes Schneckengetriebe umfasst.

11. Hebevorrichtung (14) nach irgendeinem der Ansprüche 1 bis 10, **dadurch gekennzeichnet, dass** der Gelenkausleger (20) eine Teleskopverlängerung (21) hat.

12. Hebevorrichtung (14) nach irgendeinem der Ansprüche 1 bis 11, **dadurch gekennzeichnet, dass** die Hebevorrichtung (14) ein diese in Transportstellung schützendes Gehäuse (21') mit einer Seitenklappe (21.1) zum Herausziehen der Hebevorrichtung (14) in ihre Betriebsstellung umfasst.

13. Fahrzeug mit einem länglichen Laderaum (12), der wenigstens auf einer Seite geöffnet werden kann, **dadurch gekennzeichnet, dass** das Fahrzeug mit einer Hebevorrichtung nach irgendeinem der Ansprüche 1 bis 12 ausgerüstet ist.

14. Fahrzeug nach Anspruch 13, **dadurch gekennzeichnet, dass** der Laderaum (12) aus einem auf einer Seite zu öffnenden Kofferaufbau besteht.

15. Fahrzeug nach Anspruch 13 oder 14, **dadurch gekennzeichnet, dass** die Ladekapazität der Hebevorrichtung (14) auf den Bereich 5 - 15 tm und die Reichweite auf den Bereich 4 - 8 m eingerichtet ist.

## Revendications

1. Appareil de levage (14) pour un véhicule (10), dans lequel véhicule il y a un espace de chargement (12) ayant un accès sur le côté, et sous l'espace de chargement (12) au milieu il y a le châssis longitudinal (11) du véhicule (10) qui est substantiellement plus étroit que l'espace de chargement (12), où l'appareil de levage (14) comprend
- les attaches (13) de l'appareil de levage attachés au châssis (11) du véhicule (10),
- une base (17) liée aux attaches (13) de l'appareil de levage et à une base rotative (17.3) sur laquelle sont installés les dispositifs de manoeuvre de la rotation,
- une flèche principale (18.1, 18.2) liée par un pivot à la base rotative (17.3),
- une flèche articulée (20) liée par un pivot à la flèche principale (18.1, 18.2), et
- un premier vérin hydraulique (19) pour actionner la flèche principale (18.1, 18.2),
- un deuxième vérin hydraulique (15) pour actionner la flèche articulée (20), lié à une extrémité par un pivot à la flèche articulée (20),
- au moins un pied support (22) actionné par un dispositif de manoeuvre pour maintenir la stabilité du véhicule (10) dans la situation de levage,
- un mécanisme de mouvement latéral (16, 16', 35) pour la base (17), à l'aide duquel l'appareil de levage (14) peut être déplacé entre la position de transport et la position d'utilisation, dans laquelle position de transport l'appareil de levage (14), avec les flèches principale et articulée (18.1, 18.2, 20) dans l'état rentré, est sous l'espace de chargement (12) sur le côté du châssis (11) et dans la position d'utilisation l'appareil de levage (14) est à l'extérieur du côté d'accès de l'espace de chargement (12) et essentiellement au milieu du côté,
**caractérisé en ce que** le mécanisme de mouvement latéral comprend des bras parallélogrammes (16, 16') et un dispositif de manoeuvre (35) qui les actionne, lesquels bras parallélogrammes (16, 16') sont tous deux liés à une extrémité par un pivot aux attaches (13) de l'appareil de levage et à l'autre extrémité à la base (17), et que le premier vérin hydraulique (19) pour actionner la flèche principale (18.1, 18.2) est disposé de sorte à déplacer la charge en étant lié à sa première extrémité par un pivot à la base rotative (17.3) et à l'autre extrémité à la flèche principale (18.1, 18.2), à son extrémité située du côté de la flèche articulée (20).

2. Appareil de levage (14) selon la revendication 1, **caractérisé en ce que** le pied support (22) est installé sur le bord extérieur de la base (17).

3. Appareil de levage (14) selon la revendication 1 ou 2, **caractérisé en ce que** la flèche principale (18.1, 18.2) est une flèche double comprenant deux flèches partielles, et une flèche articulée (20) est située entre ces deux flèches partielles.

4. Appareil de levage (14) selon la revendication 3, **caractérisé en ce que** la flèche principale (18.1, 18.2) est actionnée par deux vérins hydrauliques (19) similaires qui sont placés au niveau desdites flèches partielles et liés par leurs parties supérieures à un pivot commun (26), par lequel la flèche articulée (20) est liée à la flèche principale (18.1, 18.2) .

5. Appareil de levage (14) selon la revendication 4, **caractérisé en ce que** la flèche articulée (20) est actionnée par un troisième vérin hydraulique (15) similaire au milieu lié à sa partie inférieure par un pivot à la base rotative (17).

6. Appareil de levage (14) selon l'une quelconque des revendications 1 à 5, **caractérisé en ce que** la longueur des bras parallélogrammes (16, 16') est disposée de sorte que, quand les bras parallélogrammes sont dans leur position extrême, le milieu de la base rotative est situé à l'extérieur de l'espace de chargement (12) à un point dans la direction latérale de 20 à 70 %, de préférence de 30 à 50 %, de la largeur de l'espace de chargement.

7. Appareil de levage (14) selon l'une quelconque des revendications 1 à 6, **caractérisé en ce que** la base (17) est une structure parallélépipédique.

8. Appareil de levage (14) selon l'une quelconque des revendications 1 à 7, **caractérisé en ce que** la base rotative est une couronne d'orientation.

9. Appareil de levage (14) selon la revendication 8, **caractérisé en ce que** le dispositif de manoeuvre de la rotation comprend un engrenage d'angle.

10. Appareil de levage (14) selon la revendication 8, **caractérisé en ce que** le dispositif de manoeuvre de la rotation comprend un engrenage à vis sans fin intégré dans la couronne d'orientation.

11. Appareil de levage (14) selon l'une quelconque des revendications 1 à 10, **caractérisé en ce qu'**il y a une rallonge télescopique (21) dans la flèche articulée (20).

12. Appareil de levage (14) selon l'une quelconque des revendications 1 à 11, **caractérisé en ce que** l'appareil de levage (14) comprend dans sa position de transport un coffre (21) le protégeant, dans lequel il y a une trappe latérale (21.1) pour extraire l'appareil de levage (14) à travers celle-là vers sa position de fonctionnement.

13. Véhicule dans lequel il y a un espace de chargement (12) étendu qui s'ouvre sur au moins un côté, **caractérisé en ce qu'**il est équipé d'au moins un appareil de levage (14) selon l'une quelconque des revendications 1 à 12.

14. Véhicule selon la revendication 13, **caractérisé en ce que** l'espace de chargement (12) est un coffre qui s'ouvre sur le côté.

15. Véhicule selon la revendication 13 ou 14, **caractérisé en ce que** la capacité de charge de l'appareil de levage (14) est disposée de sorte qu'elle soit dans l'intervalle de 5 à 15 t et sa portée dans l'intervalle de 4 à 8 m.
